# FASCICULE DE BREVET EUROPEEN

(11) **EP 0 880 774 B1**
(45) Date de publication et mention de la délivrance du brevet: **20.10.1999**
(21) Numéro de dépôt: 97905207.3
(22) Date de dépôt: 14.02.1997
(51) Int. Cl.: G11B 5/31, G11B 5/17, G11B 5/127

(54) **TETE MAGNETIQUE VERTICALE A BOBINAGE INTEGRE ET SON PROCEDE DE REALISATION**
SENKRECHTER MAGNETKOPF MIT INTEGRIERTER SPULE UND HERSTELLUNGSVERFAHREN
VERTICAL MAGNETIC HEAD WITH INTEGRATED COILING AND PROCESS FOR MAKING SAME

(30) Priorité: 15.02.1996 FR 9601871
(43) Date de publication de la demande: 02.12.1998
(73) Titulaire: COMMISSARIAT A L'ENERGIE ATOMIQUE, 75015 Paris (FR)
(72) Inventeur: GAUD, Pierre, F-38500 Coublevie (FR); SIBUET, Henri, F-38120 Le Fontanil (FR); DI GIOIA, Michel, F-38640 Claix (FR)
(74) Mandataire: Signore, Robert
(86) Numéro de dépôt international: FR9700284
(87) Numéro de publication internationale: WO9730442

(56) Documents cités:
- EP-A- 0 452 193
- US-A- 5 189 580
- IBM TECHNICAL DISCLOSURE BULLETIN, vol. 37, no. 12, 1 Décembre 1994, pages 77-79, XP000487709 "THIN FILM TYPE LAMINATED HEAD"
- PATENT ABSTRACTS OF JAPAN vol. 001, no. 094 (E-039), 27 Août 1977 & JP 52 028307 A (TOSHIBA CORP), 3 Mars 1977,
- PATENT ABSTRACTS OF JAPAN vol. 006, no. 133 (P-129), 20 Juillet 1982 & JP 57 058216 A (FUJITSU LTD), 7 Avril 1982,
- PATENT ABSTRACTS OF JAPAN vol. 007, no. 241 (P-232), 26 Octobre 1983 & JP 58 128021 A (TOKYO SHIBAURA DENKI KK), 30 Juillet 1983,
- JOURNAL OF APPLIED PHYSICS, vol. 75, no. 10, PART 02B, 15 Mai 1994, pages 6397-6399, XP000458522 TANG D D ET AL: "OMEGA HEAD - AN EXPERIMENTAL 120-TURN INDUCTIVE HEAD"
- PATENT ABSTRACTS OF JAPAN vol. 013, no. 322 (P-902), 20 Juillet 1989 & JP 01 088911 A (HITACHI LTD), 3 Avril 1989,
- PATENT ABSTRACTS OF JAPAN vol. 014, no. 191 (P-1038), 18 Avril 1990 & JP 02 037513 A (HITACHI LTD), 7 Février 1990,
- PATENT ABSTRACTS OF JAPAN vol. 009, no. 314 (P-412), 10 Décembre 1985 & JP 60 145512 A (SUWA SEIKOSHA KK), 1 Août 1985,

## Description

### Domaine technique

La présente invention a pour objet une tête magnétique verticale à bobinage intégré et son procédé de réalisation.

Elle trouve une application privilégiée dans l'enregistrement vidéo grand public. Mais elle peut être utilisée aussi dans d'autres domaines, comme celui des sauvegardes de données ou celui des mémoires d'ordinateur.

### Etat de la technique antérieure

Un support d'enregistrement magnétique pour enregistrement vidéo, sauvegarde de données ou mémoire d'ordinateur, comprend de nombreuses pistes sur lesquelles sont inscrites des informations sous forme de domaines magnétiques.

Pour augmenter la densité d'informations, on augmente non seulement le nombre d'informations par unité de longueur, mais encore le nombre de pistes. Pour cela, on diminue la largeur des pistes, et, simultanément, l'intervalle les séparant, jusqu'à rendre les pistes jointives.

Pour éviter tout problème de diaphonie à la lecture, les informations sont écrites sur deux pistes adjacentes avec des angles opposés. L'angle de la tête doit être très précis (par exemple 20±0,15° dans le nouveau standard dit DVC pour "Digital Video Cassette").

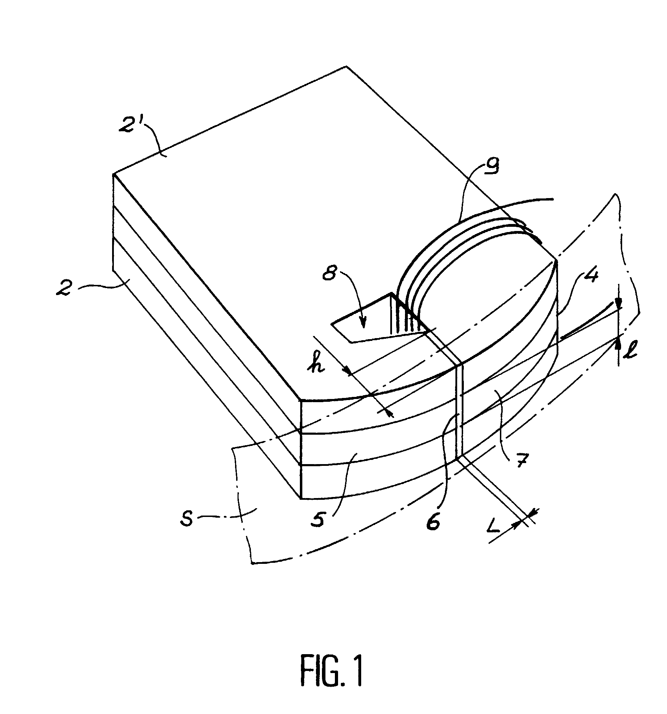

Aujourd'hui, répondant à ces exigences, on trouve sur le marché, des têtes dites "sandwich" dont la figure 1 annexée illustre un exemple de réalisation. La tête représentée comprend un substrat 2 supportant un circuit magnétique 4 constitué par une couche magnétique déposée sur la face supérieure du substrat, ce circuit présentant à l'avant deux pièces polaires 5 et 7 séparées par un entrefer 6, qui est formé par un espaceur amagnétique. Cette tête comprend en outre, au-dessus du circuit magnétique, un superstrat 2' amagnétique. Une ouverture 8 est percée à travers l'ensemble pour permettre le passage d'un enroulement conducteur 9 entourant le circuit magnétique.

La tête représentée sur la figure 1 est destinée à coopérer avec un support d'enregistrement S orienté perpendiculairement au substrat, (autrement dit, parallèlement à la tranche de celui-ci).

De telles têtes peuvent être qualifiées de "verticales" en ce sens que la surface active est perpendiculaire à la surface générale du substrat.

La largeur de l'entrefer, notée ℓ, est comptée perpendiculairement au substrat (parallèlement au support d'enregistrement), Cette largeur ℓ correspond sensiblement à la largeur respective des pistes du support. La longueur de l'entrefer, notée L, est comptée dans le sens du déplacement relatif de la tête et du support d'enregistrement. Quant à la hauteur de l'entrefer, notée h, elle est comptée parallèlement à la face du substrat supportant le circuit magnétique.

Dès que la largeur de piste devient faible (inférieure à environ 10 micromètres), ces têtes deviennent très difficiles à réaliser (problème de précision de l'alignement des deux pièces polaires lors de soudure par verre, faible efficacité due à une longueur trop importante du circuit magnétique, difficulté de réalisation du bobinage, qui est rapporté et ne se prête guère à un mode de fabrication collectif, etc ...).

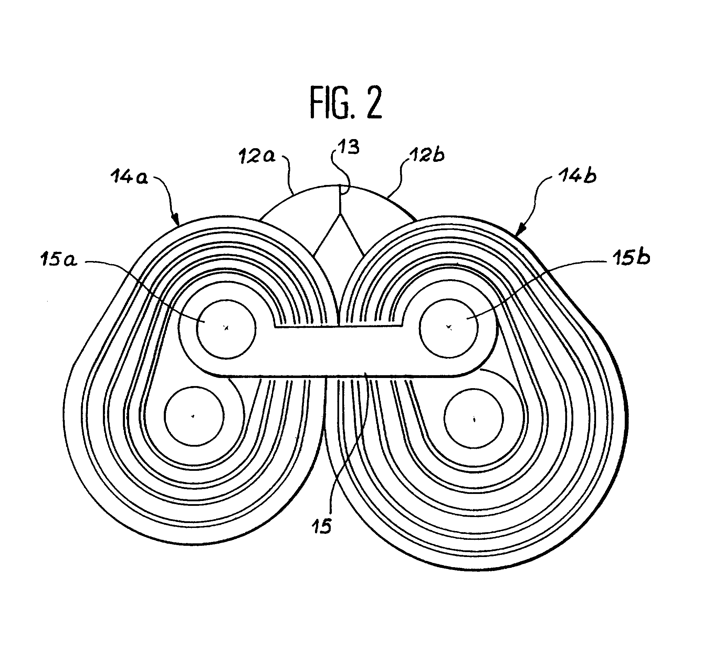

L'abrégé de brevet japonais, vol. 13, n°98 (P-840) (3446) du 8 mars 1989, propose une tête magnétique différente dont le bobinage est planaire. Cette tête est représentée sur la figure 2 annexée. Elle comprend deux pièces polaires 12a, 12b séparées par un entrefer 13, un double bobinage spiralé 14a, 14b disposé au-dessus des deux jambes du circuit magnétique, deux plots de connexion 15a, 15b et un pont magnétique 15 refermant le circuit magnétique.

Cette tête présente encore des inconvénients, liés, d'une part, à la structure de son bobinage, qui est long donc résistant, ce qui entraîne du bruit thermique, et, d'autre part, à son circuit magnétique qui est relativement long donc d'efficacité réduite.

Le document EP-A-0 467 263 divulgue une tête qui évite en partie ces inconvénients. Une telle tête est représentée sur les figures annexées 3 et 4. On y voit un substrat non magnétique 21, une première couche isolante 22, une deuxième couche isolante 29, un circuit magnétique 30, un bobinage conducteur 38 de type solénoïde s'enroulant autour du circuit magnétique, des bandes de connexion électrique 33 et des plots de connexion 34.

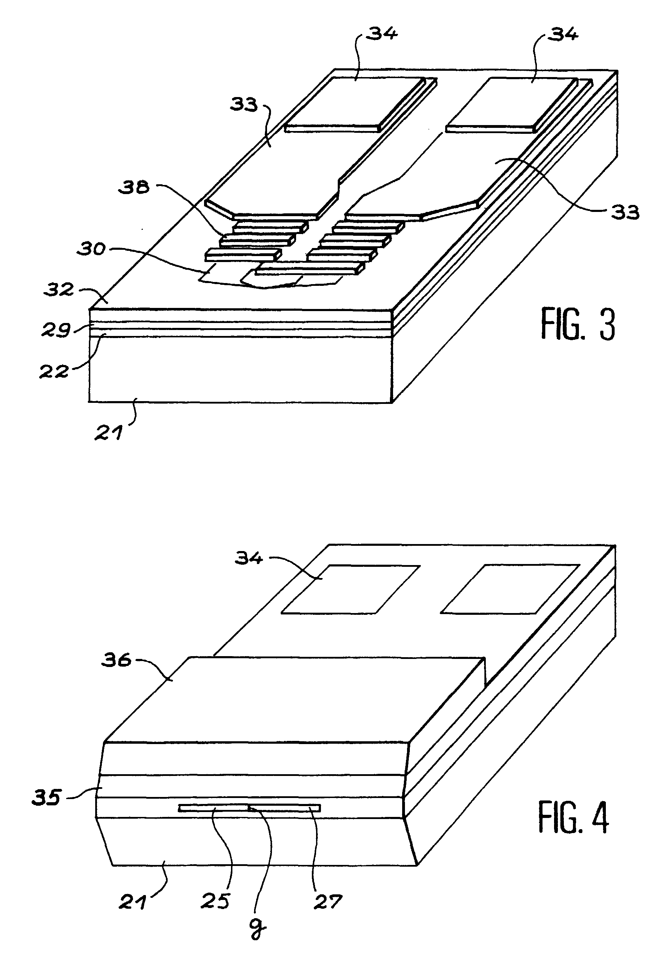

Sur la figure 4, on voit, en outre, les deux pièces polaires avant 25 et 27 séparées par un entrefer ("gap") g. Par ailleurs, une couche isolante 35 recouvrant l'ensemble et une couche de protection 36, ou superstrat, complètent l'ensemble et rendent symétrique la surface de contact avec le support d'enregistrement.

Bien que satisfaisante à certains égards, cette structure présente l'inconvénient de conduire à une très grande épaisseur de la tête dans la zone comprise entre le substrat 21 et le superstrat 36. Cette épaisseur correspond en effet à la partie inférieure du bobinage 38, aux pièces polaires 25, 27 et aux couches isolantes 22, 29, 32, 35. Cette épaisseur peut poser des problèmes de frottement avec le support d'enregistrement, avec, comme conséquence, des problèmes d'usure différentielle des différents matériaux. De plus, cette forte épaisseur entraîne des risques de décollement ou de bombé importants du fait des contraintes intrinsèques présentes dans les couches, des contraintes d'origine thermique, etc...

Par ailleurs, le procédé de réalisation d'une tête selon les figures 3 et 4 est difficilement compatible avec une réalisation collective, en particulier pour ce qui est de la réalisation d'un azimut pour l'entrefer avec un outil diamant, ou encore pour ce qui est de certaines étapes de planarisation des isolants déposés sur de fortes épaisseurs de motifs métalliques, ce qui conduit à des problèmes de couverture de marche avec l'apparition de failles au bord des motifs.

Le but de la présente invention est justement de remédier à ces inconvénients.

Le document JP-A-57-58216 décrit une tête magnétique comprenant un substrat et deux pièces magnétiques qui sont, vu du substrat, placées l'une au-dessus de l'autre et non côte à côte. Un bobinage conducteur entoure seulement l'une des pièces magnétiques. Ce bobinage comprend une nappe inférieure enterrée dans le substrat et une nappe supérieure comprise entre les deux pièces magnétiques.

Le document JP-A-52-28307 décrit une tête similaire avec des conducteurs disposés dans des caissons parallèles.

### Exposé de l'invention

L'invention propose d'intégrer dans le substrat une partie de l'enroulement, à savoir la nappe inférieure des conducteurs. En pratique, la nappe inférieure est disposée dans un caisson réalisé dans le substrat. De cette manière, l'épaisseur de la tête se trouve réduite et, corrélativement, les problèmes évoqués plus haut sont résolus.

De façon précise, l'invention a pour objet une tête magnétique verticale comprenant un substrat massif, un circuit magnétique avec au moins une première et une seconde pièces polaires disposées côte à côte vu du sbstrat et séparées par un entrefer amagnétique, ce circuit magnétique comprenant au moins une partie non enterrée dans le substrat, un bobinage conducteur entourant la partie du circuit magnétique qui n'est pas enterrée dans le substrat, cette tête étant caractérisée par le fait que le bobinage conducteur est formé d'une nappe inférieure de conducteurs disposée dans au moins un caisson réalisé dans le substrat, sous la partie non enterrée et intégrée dans le substrat et d'une nappe supérieure de conducteurs chevauchant la partie non enterrée.

Selon un premier mode de réalisation, le circuit magnétique comprend une pièce magnétique arrière de fermeture et une première et une seconde pièces magnétiques latérales reliées magnétiquement à la pièce magnétique arrière de fermeture et respectivement avec les première et seconde pièces polaires, les première et seconde pièces magnétiques latérales constituant chacune une partie non enterrée du circuit magnétique, et par le fait que le bobinage conducteur comprend au moins un enroulement bobiné autour d'au moins la première et/ou la seconde pièces magnétiques latérales, cet enroulement comprenant une nappe inférieure de conducteurs passant sous les première et/ou seconde pièces magnétiques latérales, cette nappe inférieure étant intégrée dans le substrat, et une nappe supérieure chevauchant la première et/ou la seconde pièces polaires latérales. Les pièces magnétiques latérales sont reliées directement aux autres éléments du circuit magnétique (pièce arrière de fermeture et pièces polaires) ou par l'intermédiaire d'une couche isolante d'épaisseur contrôlée (par exemple du SiO₂ ou de l'alumine d'épaisseur 0,1 à 0,2 µm). L'utilisation d'une couche isolante est préférable pour un fonctionnement à haute fréquence.

De manière avantageuse, les pièces polaires sont également intégrées dans le substrat.

De préférence encore, la pièce magnétique arrière de fermeture est, elle aussi, intégrée dans le substrat.

Lorsque le substrat n'est pas en matériau isolant, soit qu'il est conducteur, soit qu'il est semiconducteur, l'intégration de la nappe inférieure de conducteurs s'obtient en gravant lesdits caissons dans le substrat, caissons qui sont remplis de matériau isolant dans lequel les conducteurs sont ensuite réalisés. Ce sera le cas, notamment, pour un substrat en silicium.

Dans un autre mode de réalisation, le circuit magnétique comprend une pièce arrière de fermeture constituant la partie non enterrée du circuit, et le bobinage conducteur comprend un enroulement bobiné autour de cette pièce arrière de fermeture, avec une nappe inférieure de conducteurs passant sous la pièce arrière de fermeture, cette nappe inférieure étant enterrée dans le substrat et une nappe supérieure passant au-dessus de la pièce arrière de fermeture.

De manière avantageuse, la pièce arrière de fermeture est reliée magnétiquement à la première et à la seconde pièces polaires, sans qu'il y ait de pièces magnétiques latérales.

Dans cette variante, les première et seconde pièces polaires peuvent être enterrées dans le substrat.

Selon encore un autre mode de réalisation, les première et seconde pièces polaires constituent la partie du circuit magnétique non enterrée dans le substrat et le bobinage conducteur entoure au moins l'une desdites première et seconde pièces polaires, ce bobinage conducteur comprenant une nappe inférieure de conducteurs passant au moins sous l'une des pièces polaires et étant enterrée dans le substrat et une nappe supérieure de conducteurs chevauchant au moins l'une des pièces polaires.

La présente invention a également pour objet un procédé de réalisation d'une tête magnétique verticale telle qu'elle vient d'être définie. Ce procédé consiste, sur un substrat massif, à former un circuit magnétique avec une première et une seconde pièces polaires disposées côte à côte vu du substrat et séparées par un entrefer amagnétique, ce circuit magnétique comprenant au moins une partie non enterrée dans le substrat et à former un bobinage conducteur autour de la partie non enterrée du circuit, ce procédé étant caractérisé par le fait qu'on forme ledit bobinage conducteur en constituant une nappe inférieure de conducteurs dans au moins un caisson réalisé dans le substrat et passant sous la partie non enterrée et en enterrant cette nappe inférieure dans le substrat, et en constituant une nappe supérieure de conducteurs chevauchant la partie non enterrée du circuit magnétique.

Le procédé de l'invention comprend les modes de mise en oeuvre correspondant aux modes de réalisation de la tête (formation d'un circuit magnétique avec seulement une pièce arrière de fermeture, ou sans pièce arrière).

### Brève description des dessins

- la figure 1, déjà décrite, illustre une tête magnétique connue de type sandwich ;
- la figure 2, déjà décrite, illustre une tête magnétique connue à bobinage planaire ;
- la figure 3, déjà décrite, illustre encore une tête magnétique connue avec bobinage en solénoïde ;
- la figure 4, déjà décrite, montre une autre vue de la tête précédente ;
- la figure 5 montre le substrat de départ dans un exemple de procédé conforme à l'invention ;
- la figure 6 montre, en coupe longitudinale, l'étape de formation d'un premier caisson ;
- la figure 7 montre l'étape de dépôt d'une couche isolante ;
- la figure 8 montre toujours en coupe longitudinale, l'étape de croissance d'une double couche magnétique ;
- la figure 9 montre, en coupe longitudinale, la première pièce polaire obtenue ;
- la figure 10 montre cette même première pièce polaire mais en vue de dessus ;
- la figure 11 montre la formation d'un deuxième caisson ;
- la figure 12 montre, en coupe, une deuxième pièce polaire ;
- la figure 13 montre, en vue de dessus, les deux pièces polaires et la partie magnétique arrière ;
- la figure 14 montre, en coupe transversale, l'une des pièces polaires avant et la pièce magnétique arrière de fermeture ;
- la figure 15 illustre l'étape de gravure d'un caisson pour la nappe inférieure de conducteurs du bobinage ;
- la figure 16 montre le remplissage du caisson par un isolant électrique ;
- la figure 17 montre, en coupe transversale, la nappe inférieure de conducteurs et le masque pour la prise de contacts magnétiques ;
- la figure 18 montre le sous-ensemble obtenu à ce stade, en vue de dessus, avec ses deux pièces polaires, sa pièce magnétique arrière de fermeture et sa nappe inférieure de conducteurs ;
- la figure 19 montre, en coupe transversale, une pièce magnétique latérale du circuit magnétique ;
- la figure 20 montre, en vue de dessus, le sous-ensemble obtenu à ce stade ;
- la figure 21 montre, en coupe transversale, l'étape de réalisation des plots de raccordement électrique ;
- la figure 22 montre, en vue de dessus, un détail de ces plots de raccordement électrique ;
- la figure 23 illustre, en coupe transversale, l'étape de réalisation de la nappe supérieure de conducteurs ;
- la figure 24 montre, en vue de dessus, un détail de ces conducteurs supérieurs ;
- la figure 25 montre, en coupe, l'étape de réalisation des plots de contact du bobinage conducteur ;
- la figure 26 montre une vue de dessus de la tête obtenue selon cet exemple de réalisation ;
- la figure 27 illustre une variante à orientation croisée de l'aimantation ;
- la figure 28 illustre un autre mode de réalisation où le circuit magnétique ne comprend que deux pièces polaires non intégrées, avec un enroulement autour d'une des pièces polaires ;
- la figure 29 illustre encore un autre mode de réalisation où le circuit magnétique comprend deux pièces polaires et une pièce arrière de fermeture non intégrée, l'enroulement étant bobiné autour de cette pièce arrière de fermeture ;
- la figure 30 illustre le même mode de réalisation mais avec une forme différente pour la pièce arrière de fermeture.

### Exposé détaillé de modes de réalisation

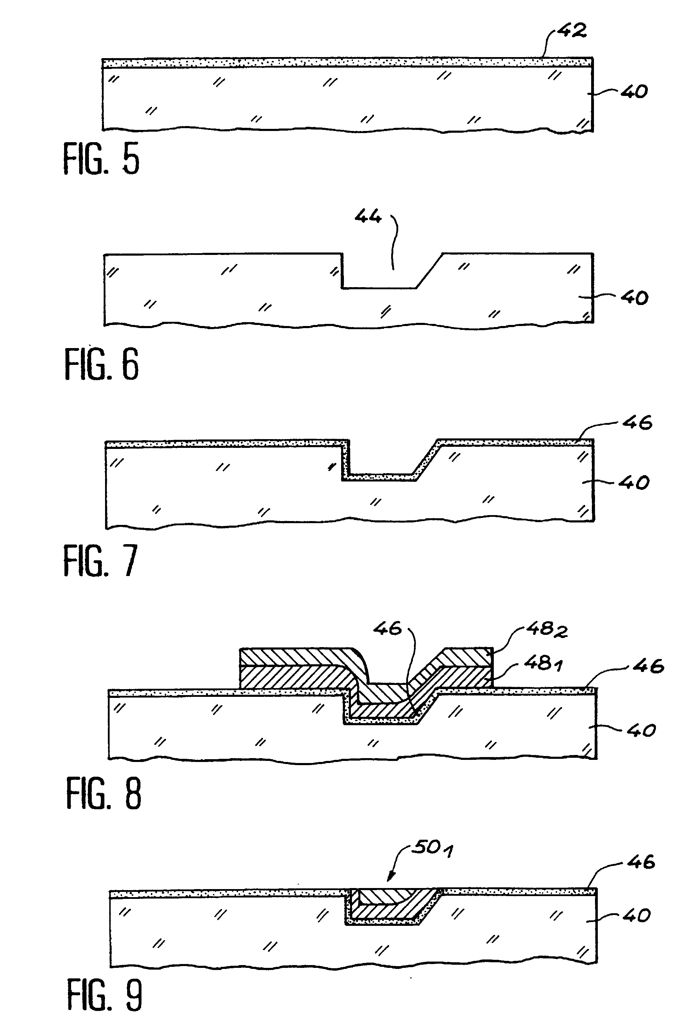

On va décrire maintenant, en liaison avec les figures 5 à 27, un premier exemple de réalisation d'une tête magnétique selon l'invention. Il va de soi que les matériaux mentionnés et les dimensions indiquées ne sont donnés qu'à titre explicatif et nullement limitatif.

On part, dans le mode particulier de réalisation décrit, d'un substrat massif 40 en silicium, d'orientation cristallographique <110> (figure 5). On peut utiliser toute autre orientation cristallographique pour faire varier l'azimut de la tête. Sur ce substrat, on dépose une couche de matériau isolant 42, en SiO₂ ou en Si₃N₄, par la technique LPCVD ("Low Pressure Chemical Vapor Deposition"). Cette couche isolante 42 peut avoir une épaisseur de 40 nm (ou 0,04 µm). Par une opération de lithographie, on définit la forme de la première pièce polaire et l'on dispose divers repères de rodage. On grave alors la couche 42 et l'on effectue une gravure anisotrope du substrat, par exemple par une solution de KOH, ce qui donne naissance à un premier caisson 44 (figure 6) dont l'un des flancs est vertical dans ce cas, selon les plans <111> du silicium. On supprime ensuite la couche 42 ayant servi de masque.

On effectue ensuite une oxydation thermique de l'ensemble pour former une couche 46 de SiO₂ (Fig. 7). Cette couche peut avoir une épaisseur de 0,2 µm.

On dépose ensuite un matériau magnétique dans le caisson. On peut procéder, par exemple, par croissance électrolytique. Pour cela, on dépose une sous-couche conductrice par pulvérisation cathodique, par exemple en NiFe de 0,1 µm d'épaisseur. Par une première 'lithographie, on forme un masque par exemple en résine présentant une ouverture en regard de la sous-couche disposée dans le fond du caisson. On effectue ensuite une électrolyse de NiFe, par exemple sous champ magnétique, pour obtenir une couche magnétique avec des domaines magnétiques orientés parallèlement à l'entrefer. On supprime ensuite la résine.

On peut opérer en deux fois et intercaler une couche d'isolant et une sous-couche conductrice entre les deux couches magnétiques pour améliorer les performances en haute fréquence. Par exemple, pour une épaisseur totale des pièces polaires de 6 µm, on peut réaliser deux couches de NiFe (les sous-couches conductrices de NiFe comprises) de 3 µm chacune, espacées d'une couche isolante de SiO₂ ou de Si₃N₄ ou Al₂O₃ d'épaisseur 0,1 µm. Deux telles couches magnétiques sont référencées 48₁ et 48₂ sur la figure 8.

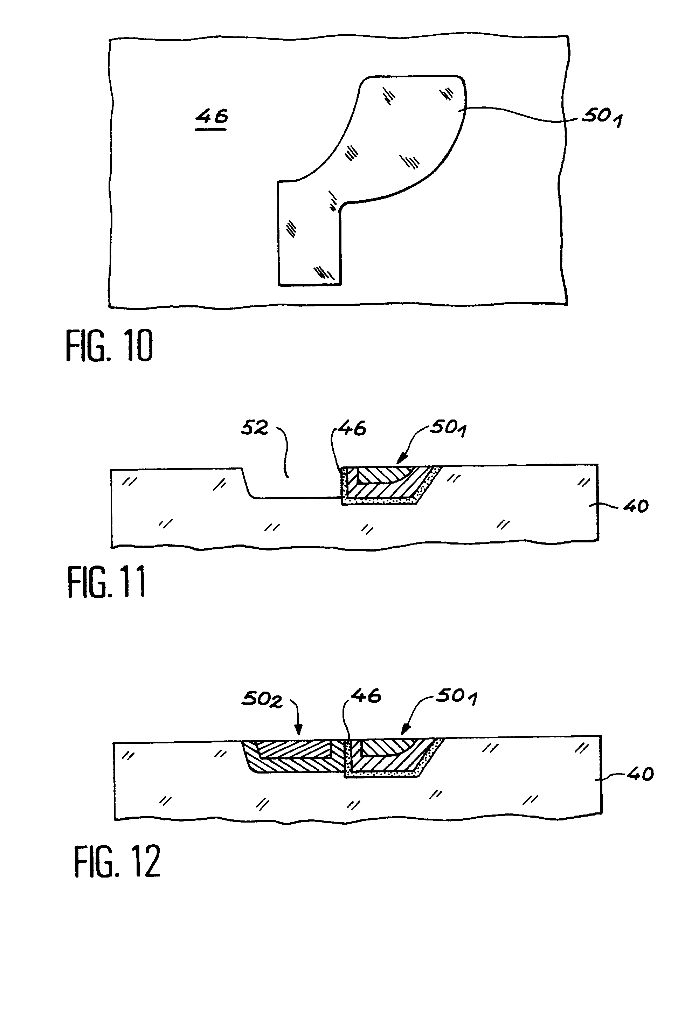

On effectue ensuite une planarisation mécanique de l'ensemble en s'arrêtant sur la couche 46 pour obtenir la première pièce polaire 50₁. Cette pièce est représentée en coupe sur la figure 9 et en vue de dessus sur la figure 10.

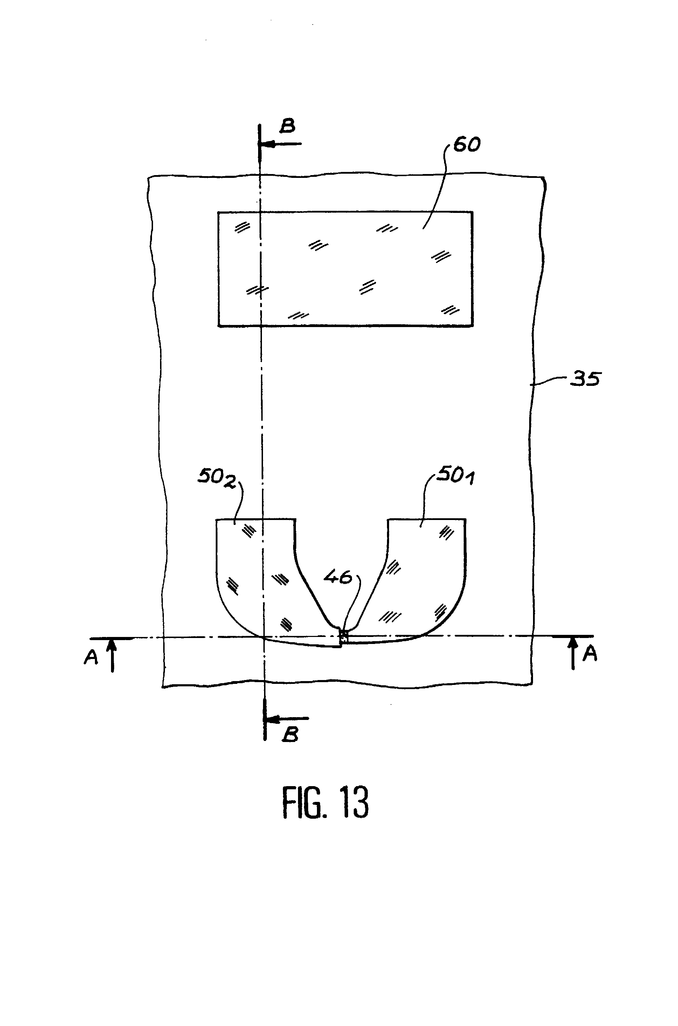

On dépose ensuite sur le sous-ensemble obtenu une seconde couche isolante, par exemple en SiO₂ d'épaisseur 0,2 µm. Par lithographie, on définit une ouverture et par une gravure prenant pour masque la couche de SiO₂ obtenue et ce qui reste de la couche 46, on creuse un second caisson 52 (figure 11) par gravure isotrope, par exemple par plasma hyperfréquence pour avoir une bonne sélectivité par rapport à l'oxyde de silicium. En gravant le second caisson 52, on grave également un caisson arrière, qu'on ne voit pas sur la figure 11, mais qu'on verra sur les figures ultérieures, notamment sur la figure 13. On supprime ensuite le masque et ce qui reste de la couche 46 en surface et l'on dépose un matériau magnétique dans le second caisson 52 et dans le caisson arrière. On peut procéder encore par croissance électrolytique de NiFe, comme précédemment, et cela en une ou en deux couches séparées par une couche d'isolant.

On planarise l'ensemble mécaniquement jusqu'à faire apparaître la partie verticale de la couche isolante 46, ce qui va constituer l'entrefer 46. On obtient alors les deux pièces polaires 50₁ et 50₂ telles qu'elles sont représentées en coupe sur la figure 12. La figure 13 montre en vue de dessus ces mêmes pièces polaires 50₁ et 50₂ séparées par l'entrefer 46 et également la pièce magnétique arrière 60 qui va servir à fermer le circuit magnétique.

La figure 13 permet également d'illustrer les deux types de coupe qui sont utilisés dans la présente description, à savoir une coupe dite longitudinale, selon la ligne AA passant par les pièces polaires, et une coupe dite transversale, selon la ligne BB passant par l'une des pièces polaires (en l'occurrence la seconde 50₂) et la pièce magnétique arrière de fermeture 60. Les coupes dont la description vient d'être faite étaient toutes des coupes longitudinales selon AA. Celles qui suivent seront toutes des coupes transversales selon BB.

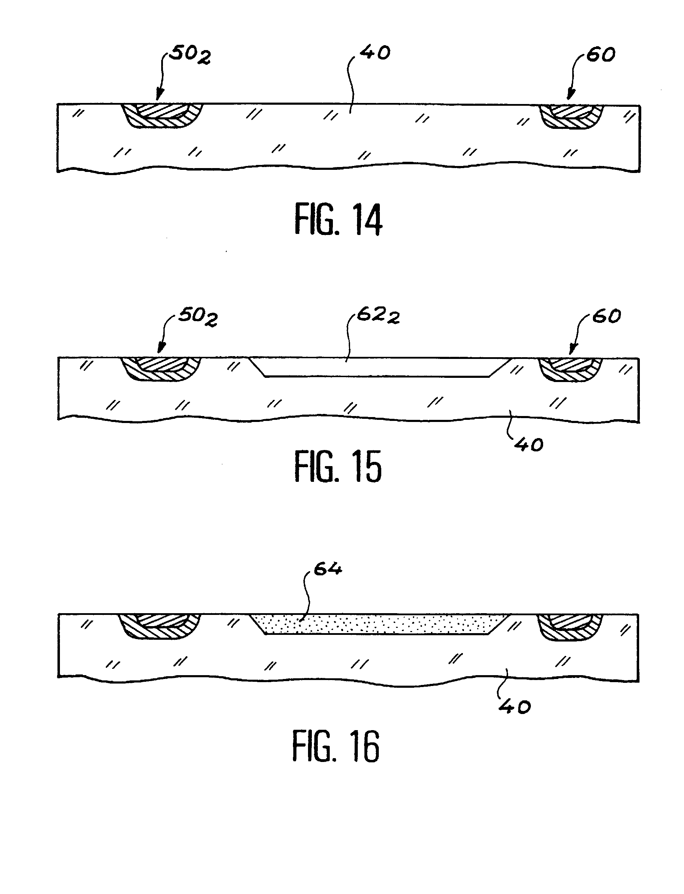

La figure 14 montre ainsi la coupe transversale du sous-ensemble obtenu à ce stade du procédé avec la seconde pièce polaire 50₂ et la pièce magnétique arrière de fermeture 60.

On réalise ensuite (Fig. 15) deux caissons latéraux 62₁, 62₂ entre les pièces polaires et la pièce magnétique arrière de fermeture 60 (seul le caisson 62₂ est visible sur la coupe de la figure 15). La gravure peut être en mode plasma radiofréquence. La profondeur des caissons peut être par exemple de 4 µm.

Lorsque le substrat n'est pas isolant, ce qui est le cas dans l'exemple décrit où le substrat est en silicium, on dépose ensuite, dans les caissons, un matériau isolant, par exemple de la silice par dépôt chimique en phase vapeur assisté par plasma (PECVD) et on planarise, par exemple, mécaniquement l'ensemble. Cette planarisation peut être précédée d'une phase de détourage par gravure pour limiter la surface isolante à planariser. La figure 16 montre le matériau isolant 64 planarisé remplissant le caisson.

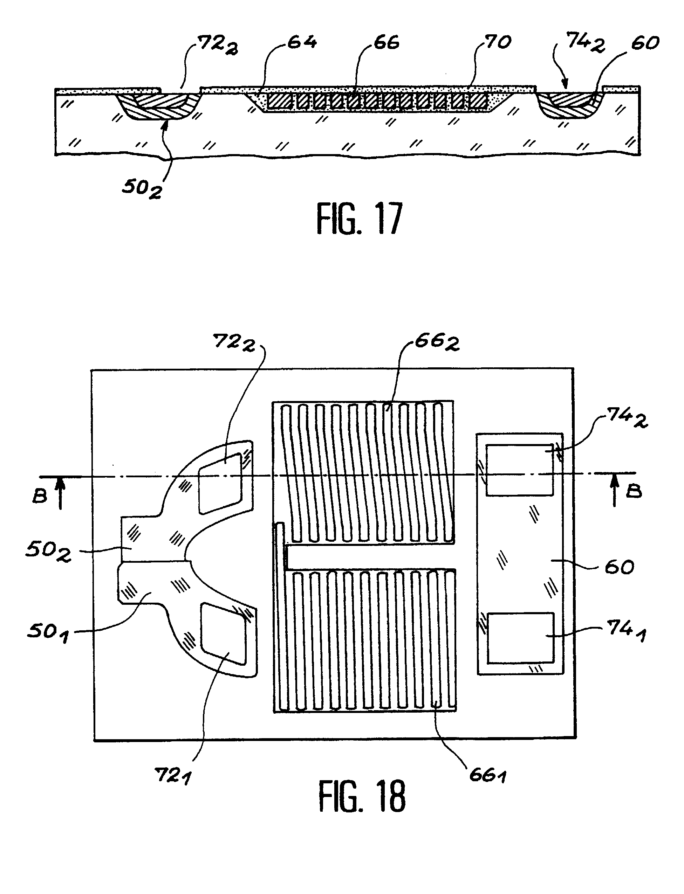

Dans cette couche d'isolant 64, on grave ensuite des sillons parallèles, par exemple par gravure plasma, sur une profondeur de 3 µm. On dépose ensuite une sous-couche de CrCu, par exemple par pulvérisation cathodique, et, par électrolyse, on comble ces sillons, par exemple par du cuivre. Sur la figure 17, on voit ainsi, en coupe transversale, les conducteurs obtenus dans ces sillons. Ils forment deux nappes inférieures 66₁, 66₂ visibles sur la figure 18, qui est une vue de dessus du sous-ensemble. Ces deux nappes inférieures s'étendent entre les pièces polaires 50₁, 50₂ et la pièce magnétique arrière de fermeture 60.

Le sous-ensemble est ensuite recouvert d'une couche isolante 70, qu'on voit sur la figure 17, par exemple en SiO₂, déposée par PECVD et d'une épaisseur de 1 µm. Cette couche est ensuite gravée, par exemple par gravure plasma, pour former des ouvertures 72₁, 72₂ au-dessus des pièces polaires et 74₁, 74₂ au-dessus des extrémités de la pièce magnétique arrière de fermeture 60. Ces ouvertures sont visibles en vue de dessus sur la figure 18. Seules les ouvertures 72₂ et 74₂ apparaissent sur la coupe BB de la figure 17.

Selon une variante de réalisation, une couche d'arrêt isolante, par exemple en Al₂O₃, de 0,2 µm est déposée avant la couche isolante 70. Cette couche d'arrêt est mise à nue par la gravure de la couche 70 dans les ouvertures 72₁, 72₂ et 74₁, 74₂ Cette couche d'arrêt est conservée dans le circuit magnétique.

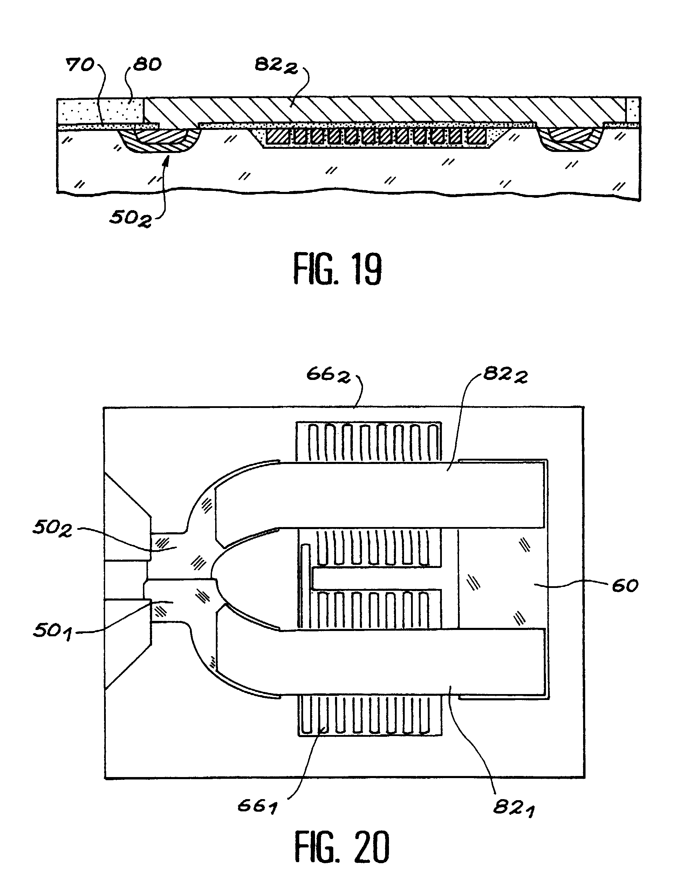

Le procédé se poursuit par la réalisation des deux pièces latérales magnétiques qui vont achever le circuit magnétique. Pour cela, on dépose tout d'abord une couche isolante 80 (Fig. 19), dont l'épaisseur est égale à celle des futures pièces magnétiques latérales. On peut ainsi déposer une couche de 3 µm de SiO₂ par PECVD. Cette couche est gravée dans les deux zones où l'on veut former les deux pièces magnétiques, c'est-à-dire au-dessus des deux nappes inférieures 66₁, 66₂ de conducteurs déjà réalisées et au-dessus des ouvertures 72₁, 72₂ et 74₁, 74₂ déjà pratiqués. Par électrolyse, on dépose ensuite un matériau magnétique 82₁, 82₂ selon les modes opératoires déjà indiqués (figure 20). On peut éventuellement feuilleter ce matériau. Pour une bonne orientation des domaines magnétiques, l'électrolyse peut s'effectuer sous champ magnétique, la direction de ce champ étant, cette fois, perpendiculaire à la direction de l'entrefer.

Le sous-ensemble obtenu est représenté en vue de dessus sur la figure 20 où l'on voit les deux pièces magnétiques latérales 82₁, 82₂ enjambant respectivement les deux nappes inférieures de conducteurs 66₁, 66₂ et faisant la jonction entre la pièce arrière 60 et les deux pièces polaires 50₁, 50₂.

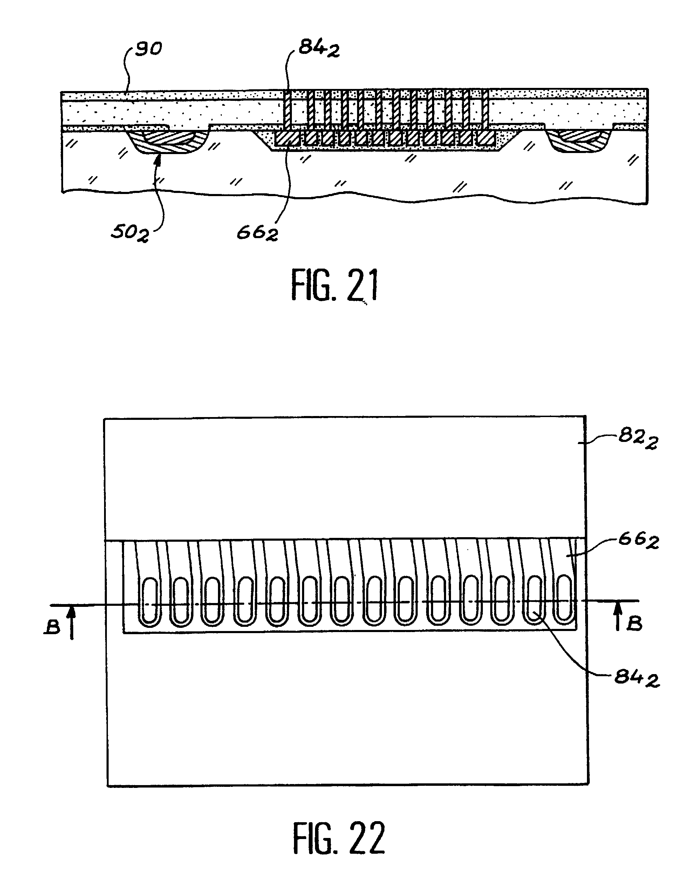

On procède ensuite à la réalisation de plots de raccordement électrique pour achever l'enroulement conducteur. Pour cela, on dépose une couche isolante 90 (Fig. 21), par exemple en SiO₂, par dépôt PECVD et d'une épaisseur de 1 µm. On grave des ouvertures dans cette couche au niveau des bords latéraux des deux nappes inférieures de conducteurs, cette gravure étant suffisamment profonde pour que soit dégagées les extrémités des conducteurs. Dans l'exemple qui a été décrit jusqu'ici, cela suppose qu'on grave la couche 90 sur sa hauteur propre et sur celle des couches 80 et 70, c'est-à-dire sur 3+1+1=5 µm. Les ouvertures peuvent avoir une largeur de 4 µm et être espacées de 6 µm. Toujours par le même procédé de croissance électrolytique, on remplit les ouvertures ainsi pratiqués par un métal, du cuivre par exemple, pour obtenir des plots de raccordement électrique 84₂ qui viennent reposer sur les extrémités des conducteurs des deux nappes inférieures 66₁, 66₂. La figure 22 montre en vue de dessus les plots 84₂ aux extrémités situées le long du bord latéral interne de la pièce magnétique latérale 82₂ de fermeture du circuit. Des plots semblables existent sur le bord externe de la même nappe ainsi que sur l'autre nappe.

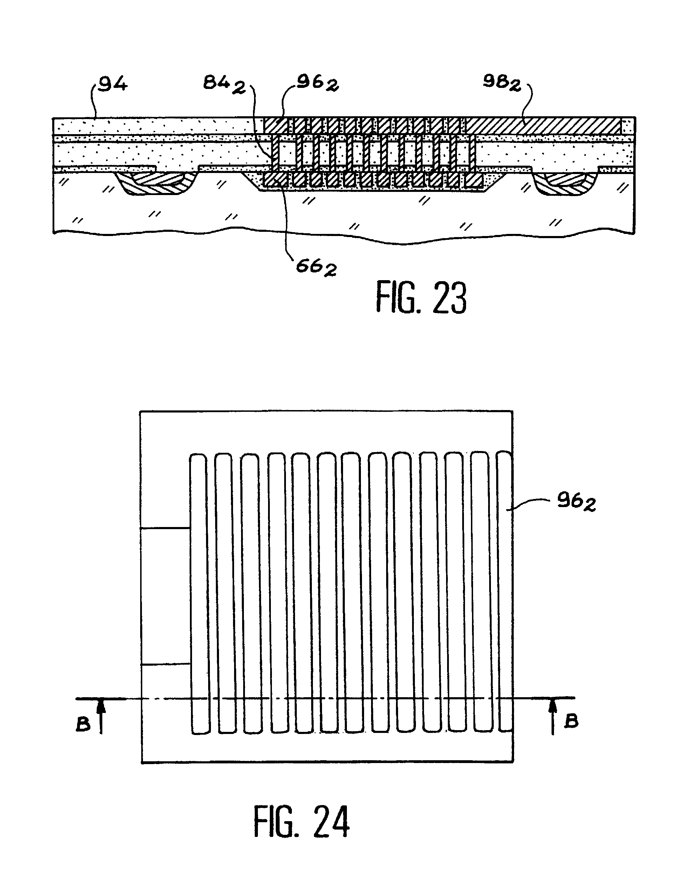

On réalise ensuite une nappe supérieure de conducteurs en déposant une couche isolante 94 d'épaisseur égale à l'épaisseur de la nappe souhaitée (Fig. 23). Par exemple, on dépose une couche de SiO₂ de 3 µm, par PECVD. On grave des sillons parallèles, par exemple de 8 µm de large espacés de 2 µm. Ces sillons vont d'un plot de raccordement à un autre. A nouveau, par un procédé de croissance électrolytique, on forme deux nappes supérieures de conducteurs 96₁, 96₂ qui viennent prendre appui, à chacune de leurs extrémités, sur les plots de raccordement électrique, ce qui ferme les deux solénoïdes sur eux-mêmes. La figure 23 montre les conducteurs 96₂ en coupe BB au niveau des plots de raccordement 84₂ et, sur la figure 24, la nappe complète en vue de dessus.

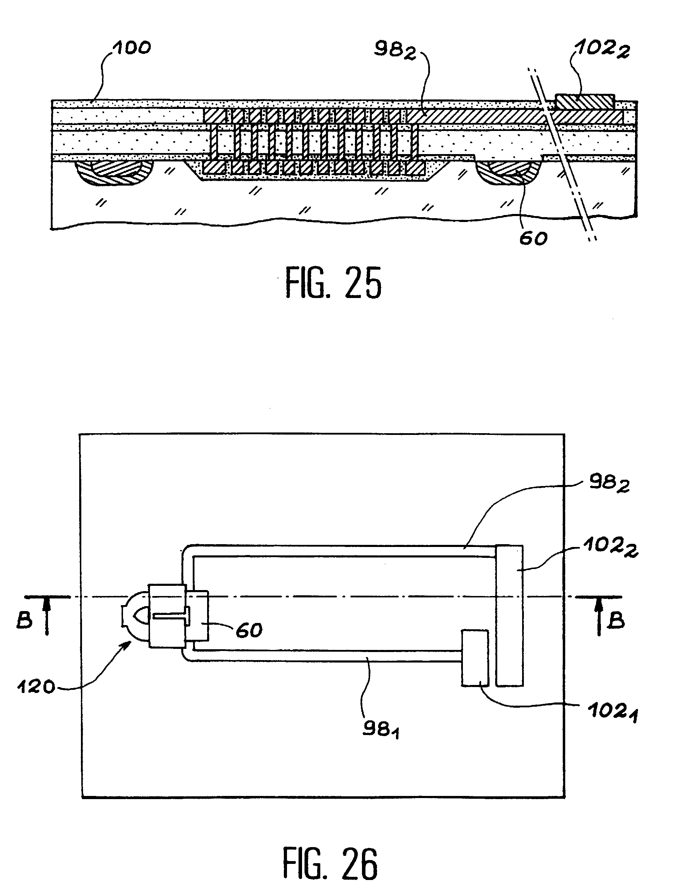

Dans cette opération, on dépose également le matériau conducteur permettant de former des connexions 98₁, 98₂ pour relier les extrémités du bobinage à de futurs plots de contact. Ces conducteurs seront représentés en vue de dessus sur la figure 26. Le conducteur 98₂ est visible en coupe sur la figure 23.

On a ainsi réalisé un double enroulement, avec deux nappes inférieures passant sous les pièces magnétiques latérales et intégrées dans le substrat, deux nappes supérieures passant au-dessus des pièces magnétiques latérales, et des plots de raccordement connectant un conducteur d'une nappe inférieure au conducteur correspondant de la nappe supérieure. Pour que ces bobinages soient corrects, il faut naturellement que les conducteurs des nappes soient légèrement inclinés de telle sorte que l'extrémité d'un conducteur inférieur soit situé en regard d'une extrémité d'un conducteur supérieur, lequel a son autre extrémité en regard de l'extrémité du conducteur inférieur adjacent au premier.

Il reste à réaliser des plots de contact pour accéder à ce bobinage. Pour cela, on dépose sur l'ensemble une couche isolante 100 (Fig. 25) dont l'épaisseur est égale à l'épaisseur du plot désiré. Par exemple, on dépose 1 µm de SiO₂ par PECVD. On grave cette couche isolante pour dégager l'extrémité des connexions 98₁, 98₂ et on réalise des plots 102₁, 102₂, en or par exemple, pour une bonne soudabilité des futurs fils de connexion. Ces plots 102₁ et 102₂ sont avantageusement réalisés par électrolyse à partir d'une sous-couche conductrice préalablement déposée. Comme sous-couche, on peut utiliser les alliages de CrAu, CrCu, voire de FeNi. Les connexions 98₁, 98₂ et les plots de contact 102₁, 102₂ sont montrés en vue de dessus sur la figure 26 et la connexion 98₂ et le plot 102₂ en coupe selon BB sur la figure 25. La figure 26 correspond à une échelle plus petite que pour les figures précédentes. Elle permet de voir l'ensemble de la tête avec sa partie active référencée 120 et ses connexions de sortie.

Sur l'ensemble ainsi obtenu, on peut éventuellement venir rapporter un superstrat, par exemple en silicium, pour symétriser la zone de contact avec le support d'enregistrement. Ce superstrat ne doit évidemment pas masquer les plots de contact.

Il est intéressant de comparer les structures connues et décrites en introduction avec celle de la présente invention. Ainsi, l'épaisseur des matériaux compris entre le substrat et le superstrat sont :
i) pour une tête de l'art antérieur tel que décrit dans EP-A-0 467 263 : bobinage inférieur dans 5 µm d'isolant, pièce polaire de 6 µm, bobinage supérieur et plots dans 5 µm d'isolant, soit 16 µm d'isolant au total ;
ii) pour une tête selon l'invention : fermeture du circuit magnétique dans 4 µm d'isolant, bobinage supérieur et plots dans 5 µm d'isolant, soit 9 µm d'isolant au total.

Le gain en épaisseur est donc évident. Les problèmes de frottement, d'usure différentielle, de contraintes intrinsèques et thermiques dans les couches d'isolant sont donc beaucoup plus faciles à résoudre dans le cas de l'invention que dans l'art antérieur.

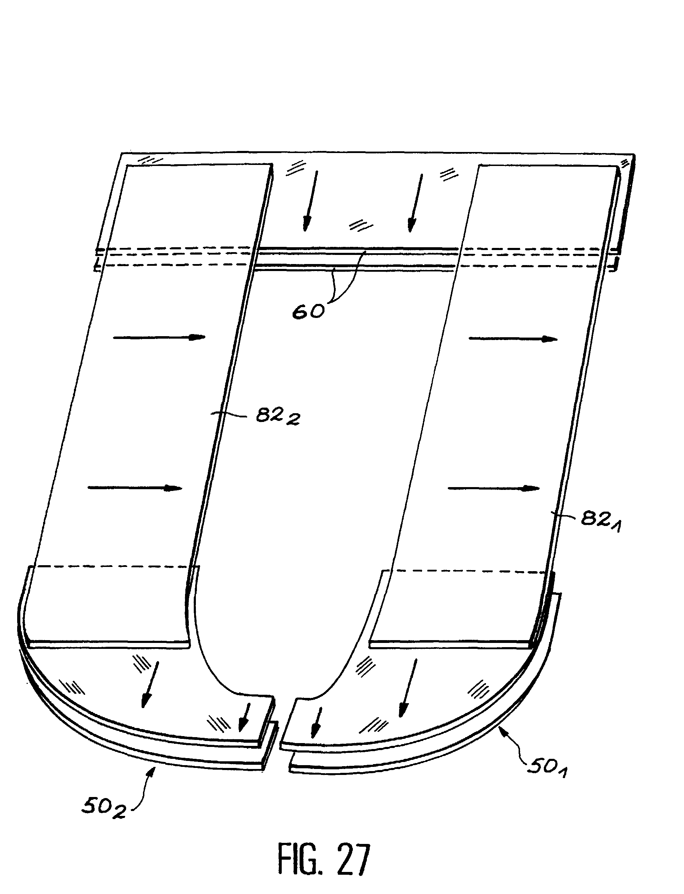

On peut encore augmenter l'efficacité de la tête magnétique qui vient d'être décrite et ses performances à fréquence élevée en jouant sur l'anistropie magnétique et en particulier sur l'orientation des domaines comme indiqué sur la figure 27. Sur cette figure n'ont été représentées que les parties magnétiques de la tête, à savoir, les pièces polaires 50₁, 50₂, supposées constituées en deux couches, les pièces latérales 82₁, 82₂, et la partie arrière de fermeture 60 également supposée en deux couches. Les flèches indiquent l'orientation de l'aimantation. Dans les pièces polaires 50₁, 50₂ et dans la pièce arrière de fermeture 60, cette orientation est parallèle à l'entrefer alors que, dans les pièces latérales 82₁, 82₂, cette orientation est celle de l'axe de facile aimantation, laquelle est perpendiculaire à l'entrefer.

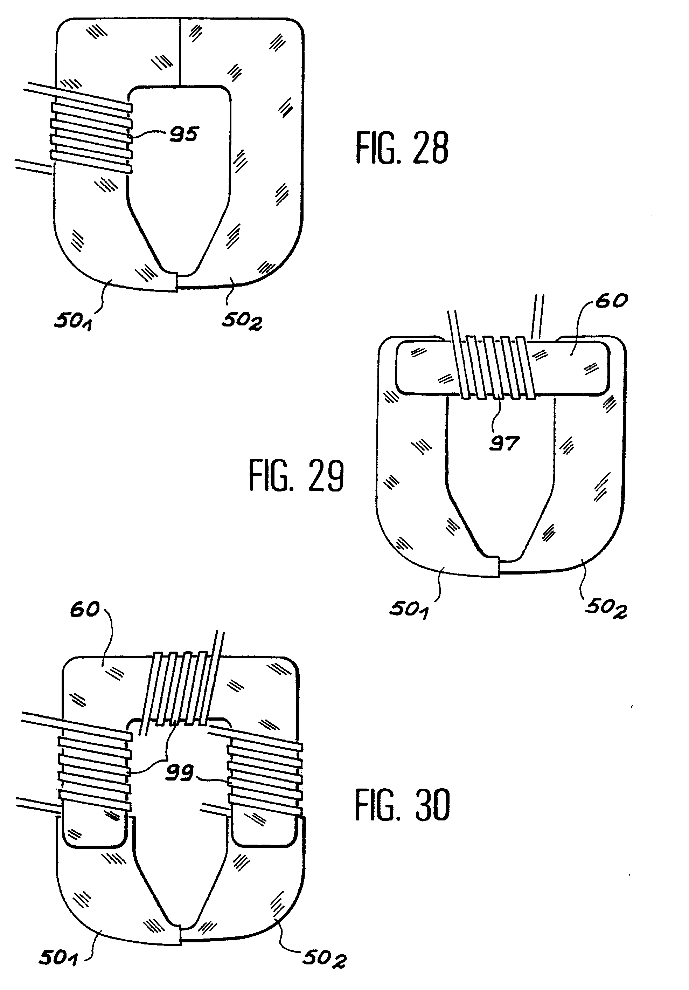

Dans le mode de réalisation qui vient d'être décrit, le circuit magnétique comprend deux pièces polaires, deux pièces latérales et une pièce magnétique arrière de fermeture. Mais l'invention n'est pas limitée à ce mode de réalisation. Elle s'étend au contraire aux têtes qui ne comprendraient que deux pièces polaires sans pièces latérales ni pièce arrière de fermeture, ou deux pièces polaires et une pièce arrière de fermeture. Les figures 28, 29 et 30 illustrent quelques uns des cas possibles.

Sur la figure 28, on voit ainsi une tête magnétique représentée schématiquement et ne comprenant que deux pièces polaires 50₁, 50₂ et un enroulement 95 autour de l'une de celles-ci (50₁). Naturellement, il est possible d'utiliser un enroulement également sur l'autre pièce polaire (50₂). Dans ce (ou ces) enroulement(s), la nappe inférieure de conducteurs est intégrée au substrat.

Dans ce mode de réalisation, les pièces polaires ne sont pas intégrées au substrat.

Sur la figure 29, on voit un autre mode de réalisation où le circuit magnétique comprend deux pièces polaires 50₁, 50₂, intégrées ou non au substrat, et une pièce magnétique arrière de fermeture 60, non intégrée au substrat. C'est autour de cette pièce arrière que se trouve bobiné l'enroulement 97, avec une nappe inférieure de conducteurs intégrée au substrat.

Sur cette figure 29, la pièce magnétique arrière de fermeture 60 est droite, mais sur la figure 30 cette pièce est en fer à cheval. L'enroulement 99 est alors bobiné autour des trois branches de la pièce arrière, toujours avec une nappe inférieure de conducteurs inférieurs intégrée au substrat.

On pourrait imaginer d'autres modes de réalisation entrant dans le cadre de l'invention, l'essentiel étant que la tête comprenne deux pièces polaires et une partie au moins qui n'est pas enterrée, le bobinage étant alors disposé autour de cette partie et ayant sa nappe inférieure de conducteurs intégrée dans le substrat.

## Revendications

1. Tête magnétique verticale comprenant un substrat massif (40), un circuit magnétique avec au moins une première et une seconde pièces polaires (50₁, 50₂) disposées côte à côte vu du substrat (40) et séparées par un entrefer amagnétique (46), ce circuit magnétique comprenant au moins une partie non enterrée dans le substrat, un bobinage conducteur entourant la partie du circuit magnétique qui n'est pas enterrée dans le substrat, cette tête étant caractérisée par le fait que le bobinage conducteur est formé d'une nappe inférieure de conducteurs disposée dans au moins un caisson (62₁, 62₂) réalisé dans le substrat (40), sous la partie non enterrée, cette nappe étant intégrée dans le substrat (40), et d'une nappe supérieure de conducteurs chevauchant la partie non enterrée.

2. Tête magnétique selon la revendication 1, caractérisée par le fait que le circuit magnétique comprend une pièce magnétique arrière de fermeture (60) et une première et une seconde pièces magnétiques latérales (82₁, 82₂) reliées magnétiquement avec la pièce magnétique arrière de fermeture (60) et respectivement avec les première et seconde pièces polaires (50₁, 50₂), les première et seconde pièces magnétiques latérales (82₁, 82₂) constituant chacune une partie non enterrée du circuit magnétique, et par le fait que le bobinage conducteur comprend au moins un enroulement bobiné autour d'au moins la première et/ou la seconde pièces magnétiques latérales (82₁, 82₂), cet enroulement comprenant une nappe inférieure de conducteurs (66₁, 66₂) passant sous les première et/ou seconde pièces magnétiques latérales (82₁, 82₂), cette nappe inférieure étant intégrée dans le substrat (40), et une nappe supérieure (96₁, 96₂) chevauchant la première et/ou la seconde pièces polaires latérales (82₁, 82₂).

3. Tête magnétique selon la revendication 1, caractérisée par le fait que le substrat (40) étant semiconducteur ou conducteur, la nappe inférieure de conducteurs (66₁, 66₂) est disposée dans au moins un caisson (62₁, 62₂) gravé dans le substrat (40) et comblé par un matériau isolant (64), les conducteurs de ces nappes inférieures étant formés dans cet isolant (64).

4. Tête magnétique selon la revendication 2, caractérisée par le fait que la première et la seconde pièces polaires (50₁, 50₂) sont intégrées dans le substrat (60) et sont disposées dans un premier et un second caissons (44, 52) gravés dans le substrat (40).

5. Tête magnétique selon la revendication 2, caractérisée par le fait que la pièce magnétique arrière de fermeture (60) est, elle aussi, intégrée dans le substrat (40) et disposée dans un caisson gravé dans le substrat (40).

6. Tête magnétique selon la revendication 1, caractérisée par le fait que le circuit magnétique comprend une pièce arrière de fermeture (60) constituant la partie non enterrée du circuit, et par le fait que le bobinage conducteur (97, 99) comprend un enroulement bobiné autour de cette pièce arrière de fermeture (60), avec une nappe inférieure de conducteurs (66₃) passant sous la pièce arrière de fermeture (60), cette nappe inférieure étant enterrée dans le substrat (40) et une nappe supérieure (96₃) chevauchant la pièce arrière de fermeture (60).

7. Tête magnétique selon la revendication 6, caractérisée par le fait que la pièce arrière de fermeture (60) est reliée magnétiquement à la première et à la seconde pièces polaires (50₁, 50₂).

8. Tête magnétique selon la revendication 7, caractérisée par le fait que les première et seconde pièces polaires (50₁, 50₂) sont enterrées dans le substrat (40).

9. Tête magnétique selon la revendication 1, caractérisée par le fait que les première et seconde pièces polaires (50₁, 50₂) constituent la partie du circuit magnétique non enterrée dans le substrat et que le bobinage conducteur (95) entoure au moins l'une desdites première et seconde pièces polaires (50₁, 50₂), ce bobinage conducteur (95) comprenant une nappe inférieure de conducteurs passant au moins sous l'une des pièces polaires et étant enterrée dans le substrat (40) et une nappe supérieure de conducteurs chevauchant au moins l'une des pièces polaires.

10. Procédé de réalisation d'une tête magnétique verticale selon la revendication 1, ce procédé consistant, sur un substrat massif (40), à former un circuit magnétique avec une première et une seconde pièces polaires (50₁, 50₂) disposées côte à côte vu du substrat (40) et séparées par un entrefer amagnétique (46), ce circuit magnétique comprenant au moins une partie non enterrée dans le substrat (40) et à former un bobinage conducteur autour de la partie non enterrée du circuit, ce procédé étant caractérisé par le fait qu'on forme ledit bobinage conducteur en constituant une nappe inférieure de conducteurs passant sous la partie non enterrée et en enterrant cette nappe inférieure dans au moins un caisson (62₁, 62₂) réalisé dans le substrat, et en constituant une nappe supérieure de conducteurs chevauchant la partie non enterrée du circuit magnétique.

11. Procédé selon la revendication 10, caractérisé par le fait qu'on forme en outre une pièce magnétique arrière de fermeture (60) et une première et une seconde pièces magnétiques latérales (82₁, 82₂) reliées magnétiquement à la pièce magnétique arrière de fermeture (60) et respectivement aux première et seconde pièces polaires (50₁, 50₂), on forme le bobinage conducteur en réalisant au moins un enroulement bobiné autour d'au moins l'une des première et seconde pièces magnétiques latérales (82₁, 82₂), l'enroulement étant obtenu en réalisant d'abord une nappe inférieure de conducteurs (66₁, 66₂) passant sous la première et/ou la seconde pièces magnétiques latérales (82₁, 82₂), cette nappe inférieure de conducteurs (66₁, 66₂) étant intégrée dans le substrat (40) et en réalisant une nappe supérieure de conducteurs (96₁, 96₂) chevauchant la première et/ou la seconde pièces magnétiques latérales.

12. Procédé selon la revendication 10, caractérisé par le fait que le substrat (40) étant semiconducteur ou conducteur, on grave au moins un caisson (62₁, 62₂) dans le substrat (40), on comble ce(s) caisson(s) par un matériau isolant (64), et on forme les conducteurs de la nappe inférieure (66₁, 66₂) dans cet isolant (64).

13. Procédé selon la revendication 12, caractérisé par le fait qu'on intégre également la première et la seconde pièces polaires (50₁, 50₂) dans le substrat (60) en gravant un premier et un second caissons (44, 52) dans le substrat (40).

14. Procédé selon la revendication 12, caractérisé par le fait qu'on intégre la pièce magnétique arrière de fermeture (60) dans le substrat (40) en la disposant dans un caisson gravé dans le substrat (40).

15. Procédé de réalisation d'une tête magnétique selon la revendication 10, caractérisé par le fait qu'on forme un circuit magnétique avec une pièce arrière de fermeture (60) non enterrée dans le substrat, et on forme le bobinage conducteur autour de cette pièce arrière de fermeture (60) en constituant une nappe inférieure de conducteurs (66₃) passant sous la pièce arrière de fermeture (60), cette nappe inférieure étant enterrée dans le substrat (40) et en constituant une nappe supérieure (96₃) chevauchant la pièce arrière de fermeture (60).

16. Procédé selon la revendication 15, caractérisé par le fait que l'on met en contact magnétique la pièce arrière de fermeture (60) avec la première et la seconde pièces polaires (50₁, 50₂).

17. Procédé selon la revendication 16, caractérisé par le fait qu'on intégre la première et la seconde pièces polaires (50₁, 50₂) dans le substrat (40).

18. Procédé selon la revendication 10, caractérisé par le fait qu'un réalise des première et seconde pièces polaires (50₁, 50₂) non enterrées dans le substrat (40) et par le fait que l'on forme un bobinage conducteur qui entoure au moins l'une desdites première et seconde pièces polaires (50₁, 50₂), ce bobinage conducteur étant obtenu en enterrant dans le substrat (40) une nappe inférieure de conducteurs et en formant une nappe supérieure de conducteurs chevauchant la pièce polaire.

## Patentansprüche

1. Senkrechter Magnetkopf mit einem massiven Substrat (40) und einem Magnetkreis mit wenigstens einem ersten und einem zweiten Polschuh (50₁, 50₂), vom Substrat (40) aus gesehen Seite an Seite angeordnet und durch einen unmagnetischen Spalt (46) getrennt, wobei dieser Magnetkreis wenigstens einen nicht in dem Substrat vergrabenen Teil umfaßt und eine leitende Spule den Teil des Magnetkreises umgibt, der nicht in dem Substrat vergraben ist,
**dadurch gekennzeichnet,**
daß die leitende Spule gebildet wird durch eine untere Lage von Leitern, angeordnet in wenigstens einer in dem Substrat (40) hergestellten Senke (62₁, 62₂), unter dem nichtvergrabenen Teil, wobei diese Lage in das Substrat (40) integriert ist, und eine obere Lage von Leitern, die den nichtvergrabenen Teil überlappen.

2. Magnetkopf nach Anspruch 1, dadurch gekennzeichnet, daß der Magnetkreis ein hinteres Magnetschlußteil (60) umfaßt und ein erstes und ein zweites Magnetseitenteil (82₁, 82₂), die magnetisch mit dem hinteren Magnetschlußteil (60) und jeweils mit dem ersten und dem zweiten Polschuh (50₁, 50₂) verbunden sind, wobei das erste und das zweite Magnetseitenteil (82₁, 82₂) jeweils einen nichtvergrabenen Teil des Magnetkreises bilden, und dadurch, daß die leitende Spule wenigstens eine Wicklung umfaßt, die wenigstens das erste und/oder das zweite Magnetseitenteil (82₁, 82₂) umgibt, wobei diese Wicklung eine untere Lage aus Leitern (66₁, 66₂), die unter dem ersten und/oder dem zweiten Magnetseitenteil (82₁, 82₂) verläuft und in das Substrat (40) integriert ist, und eine obere Lage (96₁, 96₂) umfaßt, die das erste und/oder zweite Magnetseitenteil (82₁, 82₂) überlappen.

3. Magnetkopf nach Anspruch 1, dadurch gekennzeichnet, daß das Substrat (40) halbleitend oder leitend ist, die untere Lage der Leiter (66₁, 66₂) in wenigstens einer in das Substrat (40) geätzten Senke (62₁, 62₂) angeordnet ist, aufgefüllt mit einem Isoliermaterial (64), wobei die Leiter dieser unteren Lagen in diesem Isolatormaterial (64) ausgebildet sind.

4. Magnetkopf nach Anspruch 2, dadurch gekennzeichnet, daß der erste und der zweite Polschuh (50₁, 50₂) in das Substrat (60) integriert und in einer ersten und zweiten in das Substrat geätzten Senke (44, 52) angeordnet sind.

5. Magnetkopf nach Anspruch 2, dadurch gekennzeichnet, daß das hintere Magnetschlußteil (60) auch in das Substrat (40) integriert und in einer in das Substrat (40) geätzten Senke angeordnet ist.

6. Magnetkopf nach Anspruch 1, dadurch gekennzeichnet, daß der Magnetkreis ein hinteres Magnetschlußteil (60) umfaßt, das den nichtvergrabenen Teil des Kreises bildet, und dadurch, daß die leitende Spule (97, 99) eine dieses hintere Schlußteil (60) umgebende Wicklung umfaßt, mit einer unter dem hinteren Schlußteil (60) verlaufenden unteren Lage von Leitern (66₃), wobei diese untere Lage in dem Substrat (40) vergraben ist, und einer das hintere Schlußteil (60) überlappenden obereren Lage (96₃).

7. Magnetkopf nach Anspruch 6, dadurch gekennzeichnet, daß das hintere Schlußteil (60) magnetisch mit dem ersten und dem zweiten Polschuh (50₁, 50₂) verbunden ist.

8. Magnetkopf nach Anspruch 7, dadurch gekennzeichnet, daß der erste und der zweite Polschuh (50₁, 50₂) in dem Substrat (40) vergraben sind.

9. Magnetkopf nach Anspruch 1, dadurch gekennzeichnet, daß der erste und der zweite Polschuh (50₁, 50₂) den nicht in dem Substrat vergrabenen Teil des Magnetkreises bilden und daß die leitende Spule (95) wenigstens einen der genannten ersten und zweiten Polschuhe (50₁, 50₂) umgibt, wobei diese leitende Spule (95) eine untere Lage von wenigstens unter einem der Polschuhe verlaufenden Leitern umfaßt und in dem Substrat vergraben ist, sowie eine obere Leiterlage, die wenigstens einen der Polschuhe überlappt.

10. Verfahren zur Herstellung eines senkrechten Magnetkopfs nach Anspruch 1, wobei dieses Verfahren darin besteht, auf einem massiven Substrat (40) einen Magnetkreis mit wenigstens einem ersten und einem zweiten Polschuh (50₁, 50₂) zu bilden, vom Substrat (40) aus gesehen Seite an Seite angeordnet und durch einen unmagnetischen Spalt (46) getrennt, wobei dieser Magnetkreis wenigstens einen nicht in dem Substrat (40) vergrabenen Teil umfaßt, und eine leitende Spule um den nichtvergrabenen Teil des Kreises zu bilden, wobei diese Verfahren dadurch gekennzeichnet ist, daß man die leitende Spule bildet, indem man eine untere Lage von Leitern ausbildet, die unter dem nichtvergrabenen Teil verlaufen, und indem man diese untere Lage in wenigstens einer Senke (62₁, 62₂) vergräbt, hergestellt in dem Substrat, und indem man eine obere, den nichtvergrabenen Teil des Magnetkreises überlappende Leiterlage bildet.

11. Verfahren nach Anspruch 10, dadurch gekennzeichnet, daß man außerdem ein hinteres Magnetschlußteil (60) bildet und ein erstes und zweites Magnetseitenteil (82₁, 82₂), magnetisch mit dem hinteren Magnetschlußteil (60) und jeweils mit dem ersten und dem zweiten Polschuh (50₁, 50₂) verbunden, man die leitende Spule bildet, indem man wenigstens eine Wicklung um wenigstens eines der ersten und zweiten Magnetseitenteile (82₁, 82₂) realisiert, wobei die Wicklung hergestellt wird, indem zunächst eine unter dem ersten und/oder zweiten Magnetseitenteil (82₁, 82₂) verlaufende untere Lage von Leitern (66₁, 66₂) realisiert und diese untere Lage von Leitern (66₁, 66₂) in das Substrat (40) integriert ist, und indem man eine obere, das erste und/oder das zweite Magnetseitenteil (82₁, 82₂) überlappende Lage von Leitern (96₁, 96₂) realisiert.

12. Verfahren nach Anspruch 10, dadurch gekennzeichnet, daß, wobei das Substrat (40) halbleitend oder leitend ist, man wenigstens eine Senke (62₁, 62₂) in das Substrat 40 ätzt, man diese Senke(n) mit einem Isoliermaterial (64) füllt und man die Leiter der unteren Lage (66₁, 66₂) in diesem Isoliermaterial (64) bildet.

13. Verfahren nach Anspruch 12, dadurch gekennzeichnet, daß man auch den ersten und den zweiten Polschuh (50₁, 50₂) in das Substrat (40) integriert, indem man eine erste und eine zweite Senke (44, 52) in das Substrat (40) ätzt.

14. Verfahren nach Anspruch 12, dadurch gekennzeichnet, daß man das hintere Magnetschlußteil (60) in das Substrat (40) integriert, indem man es in einer in das Substrat (40) geätzten Senke anordnet.

15. Verfahren zur Herstellung eines Magnetkopfs nach Anspruch 10, dadurch gekennzeichnet, daß man einen Magnetkreis mit einem nicht in dem Substrat vergrabenen hinteren Magnetschlußteil (60) bildet, und man die leitende Spule um dieses hintere Magnetschlußteil (60) herum ausbildet, indem man eine unter dem hinteren Magnetschlußteil (60) verlaufende unter Lage von Leitern (66₃) bildet, wobei diese untere Lage in dem Substrat (40) vergraben ist, und indem man eine obere, das hintere Schlußteil (60) überlappende obere Lage (96₃) bildet.

16. Verfahren nach Anspruch 15, dadurch gekennzeichnet, daß man das hintere Magnetschlußteil (60) in magnetischen Kontakt mit dem ersten und dem zweiten Polschuh (50₁, 50₂) bringt.

17. Verfahren nach Anspruch 16, dadurch gekennzeichnet, daß man den ersten und den zweiten Polschuh (50₁, 50₂) in das Substrat (40) integriert.

18. Verfahren nach Anspruch 10, dadurch gekennzeichnet, daß man nichtvergrabene erste und zweite Polschuhe (50₁, 50₂) in dem Substrat (40) realisiert, und dadurch, daß man eine leitende Spule ausbildet, die wenigstens einen der genannten ersten und zweiten Polschuhe (50₁, 50₂) umgibt, wobei diese leitende Spule hergestellt wird, indem man in dem Substrat (40) einen untere Lage von Leitern vergräbt und indem man eine obere, den Polschuh überlappende Lage von Leitern ausbildet.

## Claims

1. Vertical magnetic head comprising a solid substrate (40), a magnetic circuit with at least a first and a second polar part (50₁, 50₂) positioned side by side seen from the substrate (40) and separated by a nonmagnetic air gap (46), this magnetic circuit comprising at least one part non-embedded in the substrate, a conductor coil surrounding that part of the magnetic circuit non-embedded in the substrate, this head being characterized in that the conductor coil is formed by a lower sheet of conductors placed in at least one chamber (62₁, 62₂) made in substrate (40), underneath the non-embedded part, this sheet being integrated in substrate (40), and an upper sheet of conductors astride the non-embedded part.

2. Magnetic head in accordance with claim 1, characterized in that the magnetic circuit comprises a rear magnetic closing part (60) and a first and second side magnetic part (82₁, 82₂) magnetically connected to the rear magnetic closing part (60) and to the first and second polar parts respectively (50₁, 50₂), the first and second side magnetic parts (82₁, 82₂) each forming a non-embedded part of the magnetic circuit, and in that the conductor coil comprises at least one winding coiled around at least the first and/or second side magnetic parts (82₁, 82₂), this winding comprising a lower sheet of conductors (66₁, 66₂) passing underneath the first and/or second side magnetic parts (82₁, 82₂), this lower sheet being integrated in substrate (40), and an upper sheet (96₁, 96₂) astride the first and/or second side polar parts (82₁, 82₂).

3. Magnetic head in accordance with claim 1, characterized in that substrate (40) being semiconductive or conductive, the lower sheet of conductors (66₁, 66₂) is placed in at least one chamber (62₁, 62₂) etched in substrate (40) and filled with an insulating material (64), the conductors of these lower sheets being made in this insulator (64).

4. Magnetic head in accordance with claim 2, characterized in that the first and second polar parts (50₁, 50₂) are integrated in substrate (40) and are placed in a first and second chamber (44, 52) etched in substrate (40).

5. Magnetic head in accordance with claim 2, characterized in that the rear magnetic closing part (60) is also integrated in substrate (40) and placed in a chamber etched in substrate (40).

6. Magnetic head in accordance with claim 1, characterized in that the magnetic circuit comprises a rear closing part (60) forming the non-embedded part of the circuit, and in that the conductor coil (97,99) comprises a winding coiled around this rear closing part (60), with a lower sheet of conductors (66₃) passing under the rear closing part (60), this lower sheet being embedded in substrate (40) and an upper sheet (96₃) astride the rear closing part (60).

7. Magnetic head in accordance with claim 6, characterized in that the rear closing part (60) is magnetically connected to the first and second polar parts (50₁, 50₂).

8. Magnetic head in accordance with claim 7, characterized in that the first and second polar parts (50₁, 50₂) are embedded in substrate (40).

9. Magnetic head in accordance with claim 1, characterized in that the first and second polar parts (50₁, 50₂) form that part of the magnetic circuit non-embedded in the substrate, and in that the conductor coil (95) surrounds at least one of said first and second polar parts (50₁, 50₂), this conductor coil (95) comprising a lower sheet of conductors passing under at least one of the polar parts and being embedded in substrate (40), and an upper sheet of conductors astride at least one of the polar parts.

10. Process for manufacturing a vertical magnetic head in accordance with claim 1, this process consisting of, on a solid substrate (40), forming a magnetic circuit with a first and second polar part (50₁, 50₂) positioned side by side and separated by a nonmagnetic air gap (46), this magnetic circuit comprising at least one part non-embedded in substrate (40) and of forming a conductor coil around the non-embedded part of the circuit, this process being characterized in that the said conductor coil is formed by making a lower sheet of conductors passing underneath the non-embedded part and by embedding this lower layer in at least one chamber (62₁, 62₂) made in the substrate, and by making an upper sheet of conductors astride the non-embedded part of the magnetic circuit.

11. Process in accordance with claim 10, characterized in that a rear magnetic closing part (60) is also formed and a first and second side magnetic part (82₁, 82₂) magnetically connected to the rear magnetic closing part (60) and to the first and second polar parts respectively (50₁, 50₂), the conductor coil is formed by making at least one winding coiled around at least one of the first and second side magnetic parts (82₁, 82₂), the winding being obtained by making firstly a lower sheet of conductors (66₁, 66₂) passing underneath the first and/or second side magnetic parts (82₁, 82₂), this lower sheet of conductors (66₁, 66₂) being integrated in substrate (40), and secondly an upper sheet of conductors (96₁, 96₂) astride the first and/or second side magnetic part.

12. Process in accordance with claim 10, characterized in that substrate (40) being semiconductive or conductive, at least one chamber (62₁, 62₂) is etched in substrate (40), the chamber(s) is (are) filled with an insulating material (64) and the conductors of the lower layer (66₁, 66₂) are formed in this insulator (64).

13. Process in accordance with claim 12, characterized in that the first and second polar parts (50₁, 50₁) are also integrated into substrate (60) by etching a first and second chamber (44, 52) in substrate (40).

14. Process in accordance with claim 12, characterized in that the rear magnetic closing part (60) is integrated into substrate (40) by placing it in a chamber etched in substrate (40).

15. Process for manufacturing a magnetic head in accordance with claim 10, characterized in that a magnetic circuit is formed with a rear closing part (60) non-embedded in the substrate, and a conductor coil is formed around this rear closing part (60) by making a lower sheet of conductors (66₃) passing underneath the rear closing part (60), this lower sheet being embedded in substrate (40) and by making an upper sheet (96₃) astride the rear closing part (60).

16. Process in accordance with claim 15, characterized in that the rear closing part (60) is placed in magnetic contact with the first and second polar parts (50₁, 50₂).

17. Process in accordance with claim 16, characterized in that the first and second polar parts (50₁, 50₂) are integrated in substrate (40).

18. Process in accordance with claim 10, characterized in that first and second polar parts (50₁, 50₂) are made that are not embedded in the substrate (40), and in that a conductor coil is formed around at least one of said first and second polar parts (50₁, 50₂), this conductor coil being obtained by embedding in substrate (40) a lower sheet of conductors and by forming an upper sheet of conductors astride the polar part.
